# EUROPEAN PATENT APPLICATION

(11) **EP 1 111 812 A1**
(43) Date of publication of application: **27.06.2001**
(21) Application number: 99403224.1
(22) Date of filing: 20.12.1999
(51) Int. Cl.: H04B 7/04

(54) **Omni transmit and sectored receive cellular telecommunications network and method of operating the same**

(71) Applicant: Nortel Matra Cellular, 78928 Guyancourt Cédex 9 (FR)
(72) Inventor: McNicol John, Montreal Quebec H2Y3Y4 (CA)
(74) Representative: Bird, William Edward

(57) **Abstract**

A cellular radio telecommunications system is described which includes a base transceiver station for radio communication with a mobile terminal over an air interface. The base station includes at least a first and a second antenna device, the first and second antenna devices being adapted for providing radio coverage over a first and a second sector of a cell, respectively, the first and second sectors being substantially independent geographical areas and the combined geographical area of the sectors covering an angle of substantially 360° in the azimuth plane of the first and second antenna devices. A transmitter unit is provided comprising a first power amplifier, the transmitter unit transmitting substantially the same signal to the first and second antenna devices to provide omni-transmission to the cell. A first receiver unit receives signals from the first and second antenna devices and independently amplifies the received signals. A combiner selectively combines signals from the first receiver unit on a mobile terminal-by-mobile terminal basis.

The system preferably supports soft handover.

## Description

The present invention relates to radio frequency sectored or beam-formed base transceiver stations as well as methods of operating the same. The present invention particularly relates to cellular wireless telephone communication networks as well as satellite systems and cellular wireless Local Area Networks (LAN) and Metropolitan Area Networks (MAN). The present invention is particularly, useful with wide-band wireless telecommunications systems.

### TECHNICAL BACKGROUND

Wide frequency band wireless communication systems such as wide-band multicarrier Orthogonal Frequency Domain Multiple Access (OFDM) or Coded Orthogonal Frequency Domain Multiple Access (COFDM) or wide-band multicarrier spread spectrum systems e.g. Code Division Multiple Access (CDMA), usually utilize linear or linearized power amplifiers for the final amplification before radio frequency transmission from an antenna. If a non-linear amplifier is used in these applications it often results in either having to operate the amplifier well below its maximum rating (backing-off) or accepting some signal degradation, e.g. spectrum leakage to adjacent carriers. In fact, all power amplifiers are non-linear to some extent. Adjacent channel interference and link level performance degradation determine the level of non-linearity which can be tolerated, i.e. the level of linearity which must be provided by the lineariser. Linearisation techniques can be divided into four groups: feed-forward, feed-back, envelope elimination and restoration and predistortion. Linear or linearised amplifiers are expensive and therefore there is an interest in using as few of such amplifiers as possible.

In the wide-band communications systems presently being considered for 3-G (third generation) mobile telephone networks (e.g. CDMA 2000, UMTS) the linearity of the power amplifiers is considered to be a limiting factor of base station design (see "Wideband CDMA for Third Generation Mobile Communications" Tero Ojanperä, Ramjee Prasad, editors, Artech House Publishers, 1998). Wide band third generation systems place a much greater burden on the linearity of the power amplifiers than narrow band systems such as the European GSM system or for that matter narrow band CDMA systems such as IS 95. The wide-band frequency spectrum allows, on the other hand, a larger number of users due to the greater amount of spectrum available.

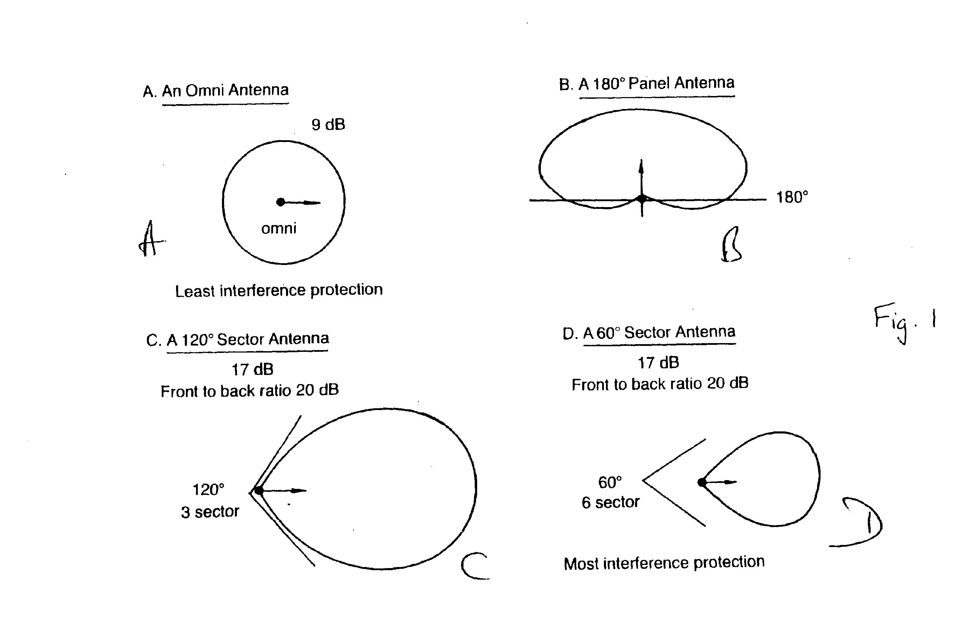

A simple antenna radiation pattern for a base transceiver station of a cellular, wireless telecommunications system is omnidirectional, i.e. relatively uniform throughout 360°. In certain applications it is convenient to use sectored radio coverage areas at a base transceiver station, e.g. in order to improve frequency reuse. Examples of such systems are cellular mobile telephone communications systems and cellular wireless Local Area Networks (W-LAN). In such systems the antennas at a cell site may be arranged to provide independent, directional transmission within sectors of a circle, e.g. 3 sectors of 120°. Various antenna patterns are shown in Fig. 1: Fig. 1A omnidirectional, Figs. 1B to D, 180°, 120° and 60° sectored, respectively. Generally, for each sector at least one power amplifier is provided for transmission. Thus, in a wideband sectored system a large number of linearised power amplifiers are required per base station. Additionally at least one and more usually two low power linear amplifiers (LNA) are provided for each sector for reception which are not as expensive as power amplifiers.

In the introduction of new technologies, the market acceptance is always one imponderable. Typical aspects of mobile telecommunication design which determine customer disappointment and therefore system growth are: coverage, call charges, handheld battery life and handheld coverage. This can be even more the case with a third generation product - does the technology really provide a user benefit which is appreciated or are the older designs, in fact, fully satisfactory? These imponderables lead to the desire to install initial systems with low cost and capacity and upgrade these as the customer demand dictates. With a high capacity system such as a wide-band radio telecommunications network, the minimum reasonable capacity is so high that it presents a hurdle to implementation.

Accordingly it is an object of the present invention to provide a cellular radio telecommunications system and a method of operating the same which is low cost on initial installation but allows an easy, economical and planned capacity growth plan.

Further, it is an object of the present invention to provide a cellular radio base transceiver station and a method of operating the same which has a low cost at initial installation but allows an easy, economical and planned capacity growth plan.

### SUMMARY OF THE INVENTION

The present invention may provide a base transceiver station for a cellular radio frequency wireless telecommunications system, the base station transceiver being for radio communication with mobile terminals over an air interface, comprising: at least a first and a second antenna device, the first and second antenna devices being adapted for providing radio coverage over a first and a second sector, respectively, the first and second sectors being substantially independent geographical areas and the combined geographical area of the sectors covering an angle of substantially 360° in the azimuth plane of the first and second antenna devices; a transmitter unit comprising a first power amplifier and for transmitting substantially the same signal to the first and second antenna devices; a first receiver unit for receiving signals from the first and second antenna devices and for independently amplifying the received signals; and a combiner for combining signals from the first receiver unit on a mobile-by-mobile basis. Preferably, signals are selected from the antenna devices which have a higher signal quality. A further amplifier may be added with associated transmitter and receiver units and third and fourth antennas for providing diversity transmission. Alternatively, the first and second receiver and transmitter units may be used to provide sectored transmit and sectored receive in two sectors.

The present invention may also include a cellular radio frequency wireless telecommunications system comprising: at least one cell with a base station transceiver for radio communication with mobile terminals over an air interface, the base station comprising: at least a first and a second antenna device, the first and second antenna devices being adapted for providing radio coverage over a first and a second sector, respectively, the first and second sectors being substantially independent geographical areas and the combined geographical area of the sectors covering an angle of substantially 360° in the azimuth plane of the first and second antenna devices; a transmitter unit comprising a power amplifier and for transmitting substantially the same signal to the first and second antenna devices; a receiver unit for receiving signals from the first and second antenna devices and for independently amplifying the received signals; and a combiner for selectively combining signals from the receiver unit on a mobile terminal-by-mobile terminal basis. Preferably, the system supports soft handover, in particular inter-cell soft handover.

The present invention may also include a method of operating a base station transceiver for radio communication with mobile terminals over an air interface; the method comprising the steps of: providing radio coverage over a first and a second sector of a cell, the first and second sectors being substantially independent geographical areas and the combined geographical area of the sectors covering an angle of substantially 360°; amplifying a radio frequency signal with a power amplifier; transmitting substantially the same amplified signal to the first and second sectors; receiving signals from the first and second sectors and for independently amplifying the received signals; and combining signals from the receiver unit on a mobile terminal-by-mobile terminal basis.

The present invention may also include a method of operating a cellular radio frequency wireless telecommunications system comprising at least one cell with a base station transceiver for radio communication with mobile terminals over an air interface; the method comprising the steps of: providing radio coverage over a first and a second sector of the cell, the first and second sectors being substantially independent geographical areas and the combined geographical area of the sectors covering an angle of substantially 360°; amplifying a radio frequency signal with a power amplifier; transmitting substantially the same amplified signal to the first and second sectors; receiving signals from the first and second sectors and for independently amplifying the received signals; and combining signals from the receiver unit on a mobile terminal-by-mobile terminal basis. The cell can be upgraded by at least one further power amplifier.

The dependent claims define independent embodiments of the present invention. The present invention will now be described with reference to the following drawings.

### BRIEF DESCRIPTIONS OF THE DRAWINGS

Figs. 1A to D show beam patterns for different types of antennas which may be used with the present invention.

Fig. 2 is a schematic diagram of base station transceiver in accordance with an embodiment of the present invention.

Fig. 3 is a schematic representation of a combiner circuit in accordance with an embodiment of the present invention.

Figs. 4A and B show the theoretical rippled beam patterns caused by omni transmission from three radially radiating antennas separated by 0.5 and 2 meters respectively.

Figs. 4C and D show the theoretical rippled beam patterns caused by omni transmission from three tangentially radiating antennas separated by 0.5 and 2 meters respectively.

Figs. 5A and B show the outage and coverage plots respectively for radially radiating trisector antennas spaced at 0.5 m and operated as an omni array.

Figs. 6A and B show the outage and coverage plots respectively for radially radiating trisector antennas spaced at 0.5 m and operated as an omni array when shadowing effects are taken into account.

Fig. 7 shows the coverage plot for radially radiating trisector antennas spaced at 0.5 m and operated as an omni array when shadowing effects and soft handover are taken into account.

Fig. 8 shows a schematic block diagram of a transceiver unit in accordance with an embodiment of the present invention.

Figs. 9 and 10 show schematic diagram of base station transceivers in accordance with further embodiments of the present invention.

Fig. 11 is a schematic representation of RF circuitry using Butler matrices in accordance with another embodiment of the present invention.

Figs. 12A and B show a graceful capacity upgrade in accordance with an embodiment of the present invention from all the cells having OTSR (Omni-Transmit, Sectored Receive) in Fig. 12A, e.g. using a base station transceiver in each cell as shown in Fig. 2, to a mixture of cells (Fig. 12B) some with OTSR, some with OTSR with antenna diversity, e.g. using a base station transceiver of Fig. 9 and some with Sectored-Transmit, Sectored Receive (STSR), e.g. a base station transceiver in accordance with Fig. 10.

### DEFINITIONS

**"Wide-band"** in accordance with the present invention refers to a transmitted radio frequency signal having a frequency spectrum of 4 MHz or greater defined by a 20 dB below maximum cut-offs.

### DESCRIPTION OF THE ILLUSTRATIVE EMBODIMENTS

The present invention will be described with reference to certain embodiments and with reference to certain drawings but the present invention is not limited thereto but only by the claims. In particular the present invention will mainly be described with reference to cellular mobile telecommunications systems but the present invention is not limited thereto. For instance, the present invention may be advantageously used in wireless LAN's. Various types of wireless LAN have been standardized or are in general use, e.g. the standards IEEE 802.11, IEEE 802.11HR (Spread Spectrum) and systems based on DECT, Blue Tooth, HIPERLAN, Diffuse or point-to-point infra-red. Wireless LAN's are discussed in detail in "Wireless LAN's" by Jim Geier, Macmillan Technical Publishing, 1999.

One aspect of the present invention is to provide a base station transceiver for a cellular radio telecommunications network especially a wide-band network which is economical on initial installation and which has an economical, technically acceptable and graceful capacity growth plan. The cellular system preferably supports soft handover between cells. Such a system may be a wide-band cellular mobile telecommunications system such as UMTS or CDMA 2000 as presently under discussion and described in "Wideband CDMA for Third Generation Mobile Communications" Tero Ojanperä, Ramjee Prasad, editors, Artech House Publishers, 1998. As the final cellular network will usually have sectored cell sites for capacity reasons and for backward compatibility with existing systems, it is preferred in accordance with the present invention to install hardware at the base station from the start which will support sectored operation at a later date. However, the initial base station is also configured to provide a low cost, initially low capacity operation using a minimum of linear power amplifiers and without providing full sectored operation. This basic installation can then be upgraded along a variety of pathways to the final, fully sectored operation, each pathway being a separate embodiment of the present invention.

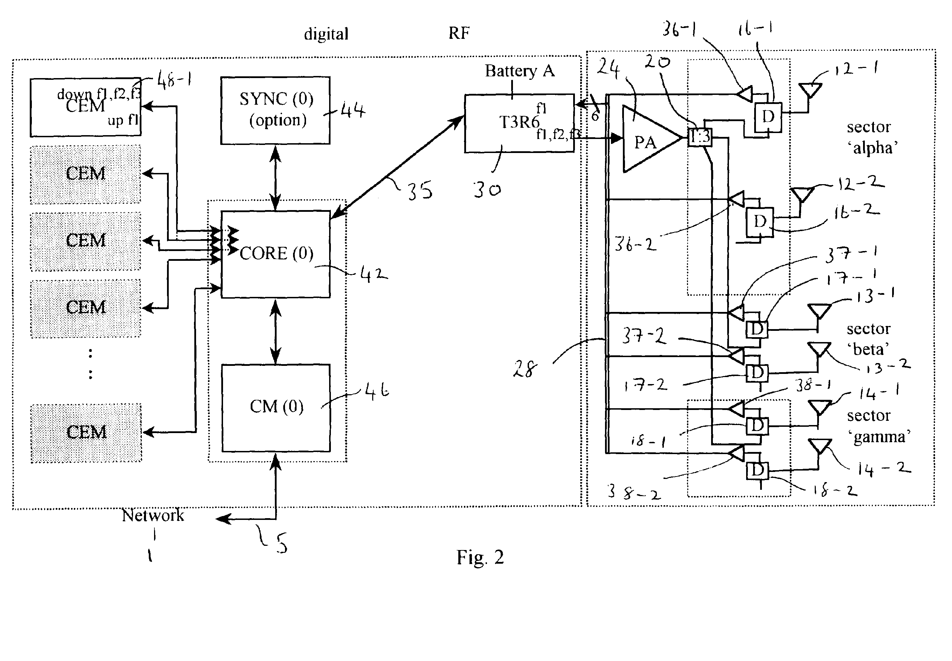

Fig. 2 is a schematic representation of a single carrier base station transceiver (BTS) 10 in accordance with an embodiment of the present invention for use in a cellular radio mobile telephone communications network 1 (not shown). The BTS 10 is operationally connected to a plurality of antennas 12-1, 12-2; 13-1 .... 14-1, 14-2, there being one or more antennas 12, 13, 14 per sector. The BTS 10 is configured for operation with at least two sectors at a later date, i.e. it has sufficient hardware such as antennas to allow fully sectored operation at a later date. The sector shapes may be selected as desired and as necessary, e.g. if there are two sectors they each may include an angle of 180° or they may have 1 x 120° and 1 x 240° included angle. The shape of the sectors is not considered to be a limitation on the present invention A typical installation may be three antennas or sets of antennas 12; 13, 14 for three sectors, typically providing radio coverage over three equal 120° sectors. A BTS 10 of this latter kind (Sectored-Receive, Sectored Transmit, STSR) but without the novel features of the present invention is supplied by Nortel Networks Corp. of Canada under the trade name MetroCell for narrow band direct sequence (IS 95) CDMA cellular mobile telephone systems.

The baseband section of the BTS 10 includes a core switch 42, an interface 46 to the network 2, at least one Signal Processing unit 48-1 and an optional synchronization circuit 44. Signals in Packet Data Format including user messages and control signals may be provided on a connection 5 (e.g. a 2 Mbit El link) between the network 1 and the BTS 10, the signals being received at the interface 46 and passed from there to the core switch 42. Similarly, messages switched through core switch 42 to the network 1 from the BTS 10 are prepared in interface 46 for transmission along connection 5 to the network 1. The core switch 42 is responsible for controlling the complete operation of the transmission and reception of signals to and from the antennas 12-14 and to and from the signal processing units 48 and the interface 46. The signal processing unit 48-1 may be adapted to carry out one or more of the following functions: modulation, demodulation, channel equalization, error coding such as parity coding, forward error correction coding and decoding, channel coding and decoding such as convolutional coding, speech compression codec, data processing and/or video codecs, interleaving, spreading such as direct sequence spreading, pulse shaping, frame processing, combining such as maximal ratio combining or selective combining, puncturing, encryption or decryption. How the baseband processing section is implemented and what functions it is adapted to carry out is not considered to be a limitation on the present invention unless specifically mentioned.

The core switch 42 is connected by means of a serial connection 35 to a transceiver unit 30. The transceiver unit 30 comprises at least one transmitter unit and at least one receiver unit. The number of transmitter and receiver units in the transceiver unit 30 will depend upon the proposed growth plan. If the base station 10 is only ever intended to be used with a single carrier, then a single, single carrier transmitter unit may be provided in transceiver unit 30. If, however, it is planned to gracefully upgrade to three carriers, three transmitter units may be provided in transceiver 30, although initially not all these may be used. Generally, there will be at least as many receiver units in transceiver unit 30 as sectors, i.e. as number of sets of antennas 12-14. If receive spatial diversity is to be employed, then more than one receiver unit will be provided in transceiver unit 30, e.g. twice as many receiver units as antenna sets 12-14 if there are two antennas per set.

In the initial configuration as shown in Fig. 2, one transmitter unit in the transceiver unit 30 is connected to a single linear power amplifier 24. Any other transmitter unit in transceiver unit 30 is terminated at its input and output in an appropriate way. A transmitter unit of transceiver unit 30 may comprise an interface for receiving the serial bit stream of digital signals from the core switch 42, a digital processing circuit (e.g. a filter/pulse shaper), a digital to analog converter, and an up-converter to radio frequencies and may also include circuitry for outputting power amplifier control signals. The analog output of the power amplifier 24 is fed to a 1:N power splitter 20, where N represents the number of sectors of the cell site, i.e. the number of antenna sets 12-14. The splitter 20 may be a hybrid circuit or an NxN Butler matrix where N is the number of antennas to be connected to the matrix, or, alternatively, any another suitable splitter for sharing the power from power amplifier 24 among the antennas 12-14, either equally or in any desired ratio. Typically, each of the N outputs of the splitter 20 is provided to a duplexer 16-1, 17-1, 18-1, for each sector. The duplexers 16-1...18-1 are designed to allow a single connection to an antenna 12-14, allowing, respectively, both transmit and receive for each antenna 12, 13, 1 4. Each duplexer 16-1, 17-1, 18-1 is connected to one antenna 12-1, 13-1, 14-1, respectively. The duplexers 16-1 ... 18-1 as well as duplexers 16-2, 17-2, 18-2 connected to diversity antennas 12-2, 13-2, 14-2, respectively, are all connected via connections 28 to the transceiver unit 30. The received signals from each antenna 12-1, 12-2, .... 14-1, 14-2 are fed to one of the receiver units in the transceiver unit 30 via a low noise amplifier 36-1, 36-2.....38-2, respectively. Each receiver unit may include a down-converter, an analog to digital converter and a digital processing circuit (e.g. a filter/pulse shaper) and an interface for transmitting a serial bit stream of digital signals to the core switch 42.

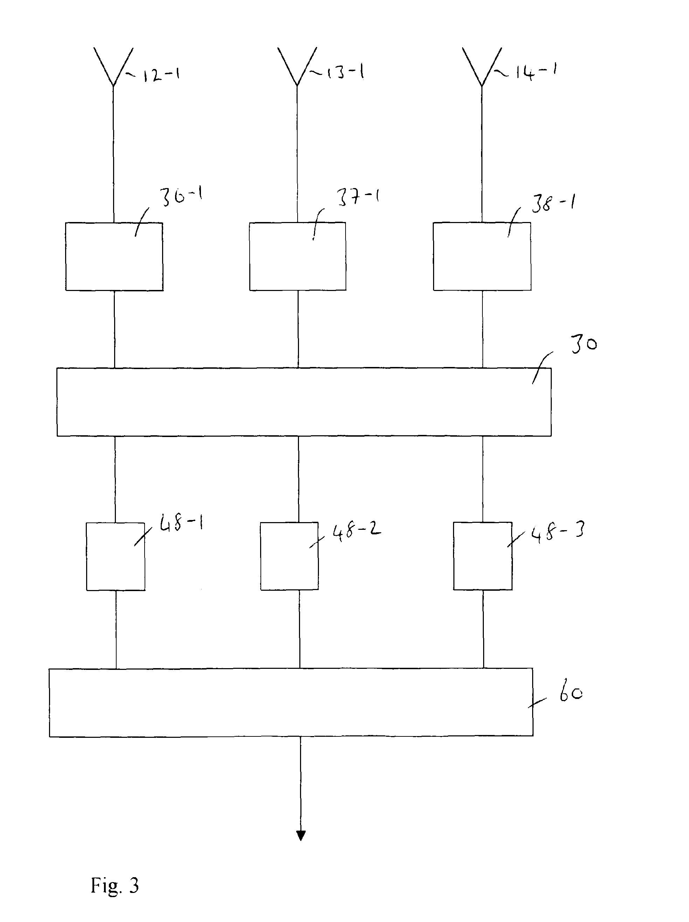

The skilled person will appreciate that the BTS 10 described above operates the antennas 12-1 to 14-1 as a combination which forms a pseudo-omni antenna in that the same signal is broadcast through a plurality of antennas whose cumulative coverage area covers 360° in the azimuth plane of the antenna. On the other hand, it is preferred if the received signals are combined in a sectored manner as will be described with reference to Fig. 3 (OTSR = Omni-Transmit, Sectored-Receive). The RF signals received by antennas 12-1, 13-1, 14-1 (only three are shown but the principle may be extended to the other antennas 12-2....14-2, etc. ) from a mobile terminal 50 are fed to the transceiver unit 30 via an LNA 36-1, 37-1, 38-1. From the transceiver unit 30 the digital signals are directed to signal processing circuits 48-1 to 48-3 respectively by core switch 42. In the processing circuits 48-1 to 48-3 the messages from the mobile 50 are decoded in accordance with the unique scrambling code used by mobile terminal 50. These decoded signals typically have very strongly differing signal to noise ratios. This is because the mobile terminal 50 is closer to one antenna than any of the others and therefore the received signal strength will be highest from this antenna and low from the others. As the antennas 12-14 are arranged in sectors this means that the signal with the highest signal to noise ratio will be normally associated with the antenna in the sector where the mobile is located. In accordance with the present invention, the best received signal or combination of received signals is selected for processing, thus generating a form of sectored receive as the signal from the sector in which the mobile terminal is located will mainly be selected for use. It is preferable to combine the signals from the processing units 56-58 using a combiner 60 in order to achieve selection of the best signal. Various methods of combining received signals are known to the skilled person all of which may be included individually in embodiments of the present invention. Preferably each of the signals received from the antennas 12-14 is multiplied by a weighting factor which is related to the signal to noise ratio of that signal. The factor is lowest (e.g. 0) for the worst signals and is 1 for the best signal. The combiner 60 in accordance with one embodiment of the present invention may be a maximal ratio combiner. Maximal ratio combiners are well known to the person skilled in the art. The input signals to the combiner 60 are added together in accordance with weightings which depend upon the signal to noise ratio of that signal. Ideally, the phase and amplitude of each signal should be adjusted before combining so that all signals to be combined are in phase before entering the combiner 60. For this purpose combiner 60 preferably includes phase detection circuits and phase delay circuits to be able to adjust the phase of each signal independently. As the signals from the mobile 50 will be most strongly received by one of the antennas 12-1.... 14-1, or from one pair 12-1, 12-2....14-2, and each of these antenna 12-1.... 14-1 or pairs 12-1, 12-2.... 14-2 is associated with one sector, the signals mainly used for combining come from one sector. Hence, the operation is similar to sectored operation. In a less preferred embodiment the combiner 60 may be an equal gain combiner. Alternatively, in accordance with another less preferred embodiment of the present invention, the combiner 60 may be a selective combiner whereby the signal or signals with the best signal to noise ratio (is) are selected for combination. The combiner 60 may be implemented as a Rake receiver as is known to the skilled person. A Rake receiver may be configured to perform the maximal ratio combining preferred in accordance with this embodiment, whereby each signal is despread with a plurality of delayed copies of the relevant scrambling code. The optimum delay is determined by this technique which provides the best signal in a multi-path environment. A description of Rake receivers may be found in CDMA, principles of spread spectrum speech communication", A. J. Viterbi, Addison Wiley, 1995

In the case that there are two or more antennas, 12-14 per sector, all the received signals are directed to the combiner 60. The effect of this is that a form of continuous softer handover is performed on the received signals from any mobile 50. In accordance with the present invention this will be described as Mobile Non-assisted Softer Handover (MONASH). The skilled person will appreciate that MONASH is different from normal softer handover between sectors of a cell site. In normal sectored operation, combiner 60 would usually be a selective combiner and softer handover would be performed when a combination of signals from more than one sector are necessary or advisable. For instance, softer handover may be initiated when it is not possible to maintain signal quality on the uplink within the power limits allowed for a mobile terminal. Alternatively, the network may consider softer handover in any circumstance when the transmit power of the mobile can be lowered by using softer handover. To assist in the selection, i.e. to allow the network to decide which signals to combine, e.g. from two or more sectors or only one, the mobile terminal 50 normally transmits information with respect to the received signal strength of the pilot or beacon signals from other transmitters in the area including the pilot signal strengths from the individual sectors of one base station. When the network detects that the signal received at the currently receiving base station transceiver is does not have the required Quality of Service (QoS) within the transmission power limits allowed for the mobile terminal, or for instance, that there is another sector of the base station which has such good reception that the mobile transmit power could be reduced, the network may decide to place the mobile terminal 50 in softer handover with another sector or other sectors of the current base station. In such a case the receiver in the currently receiving base station transceiver is instructed by the network to combine signals from more than one sector. This may be achieved, for example when the receiver has a Rake receiver, by a finger of the receiver being allocated to each signal to be combined. Normal softer handover may be described as Mobile Assisted Softer Handover (MASHO) as the mobile terminal 50 provides the signal strength of the pilot signals from its present base station and neighboring base stations to assist in the network decision about softer handover. In MONASH, the mobile terminal 50 sees the cell site as an omnidirectional one as far as the transmitted signals from the sectors of the cell site are concerned. Hence, the mobile terminal 50 does not distinguish between sectors of the cell site, i.e. does not see the sectors as separate transmitters. Hence, the mobile 50 does not send pilot signal strength values for individual sectors of a cell site but only for the complete site. The signals originating from a mobile terminal 50 and received by the sector antennas 12-14 are combined continuously in the combiner 60 on a mobile-by-mobile basis and without any activity being required from a mobile terminal 50 The mobile terminal 50 may travel around the cell site going from sector to sector without initiating a handover request and without informing the network about the pilot signal strength from individual sectors. Instead the signals which are selected (i.e. weighted most strongly) by the maximal ratio combiner 60 for combining wander from antenna to antenna as the mobile terminal 50 progresses around the cell. MONASH operation may provide a significant advantage according to the present invention by providing high signal quality on the uplink similar to normal sectored operation and an improved reception on the uplink in comparison with simply summing the outputs from the sector antennas. This is achieved using a simple and economic system.

As an alternative to the above embodiment, when the relevant standard governing the network allows it, multiple carriers f1, f2, f3, etc. may be transmitted from each cell site but only one carrier, e.g. f1, used for reception. In this case, a plurality of transmitter units may be used in transceiver unit 30, one for each carrier and the outputs from the plurality of transmitter units are combined and fed to the single power amplifier 24. Alternatively, multicarrier transmitter units may be used.

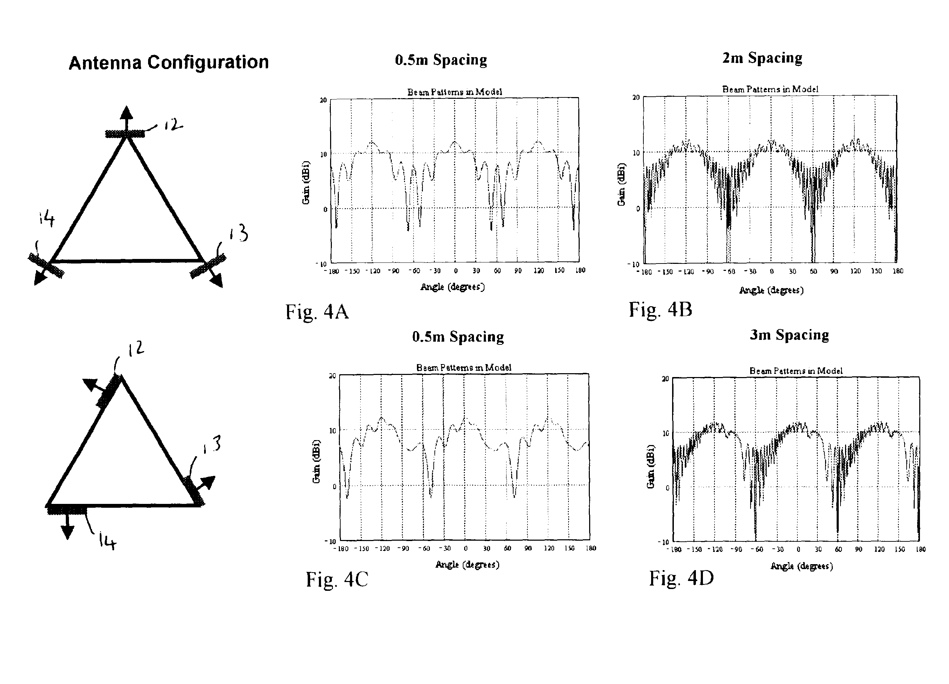

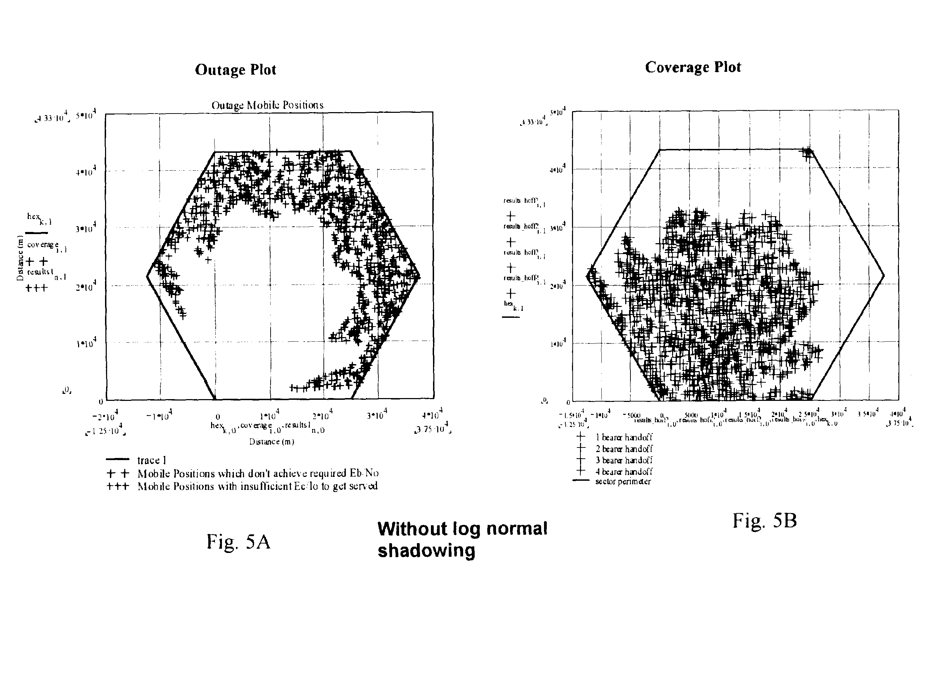

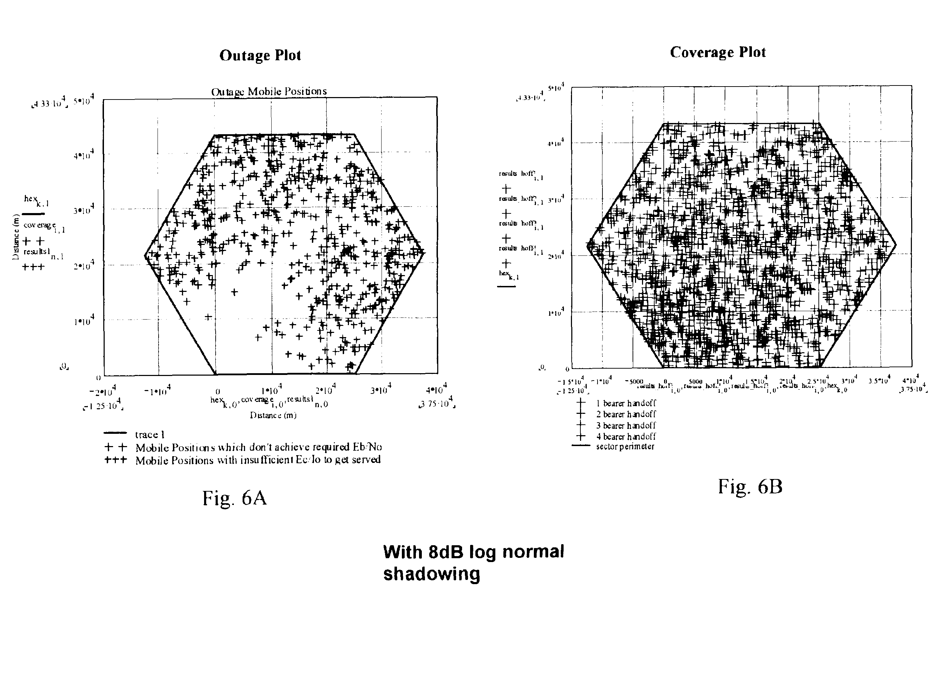

Assuming that a plurality of contiguous tri-sectored cell sites of the type mentioned above are initially used without spatial diversity (hence, there are three, equally spaced antennas per cell site, one for each sector, the transmit side being operated as a pseudo-omni cell), it would be expected that the identical transmissions from the three spatially separated antennas 12-14 for the three sectors would combine to form a combined beam pattern which would resemble a clover leaf pattern with ripples. Such a ripple pattern would be expected to result in unacceptable outages. The ripples are caused by the cancellation or partial cancellation of the signals converging from the different antennas 12-14 at individual points in the cell. Beam patterns, i.e. power gain (vertical axis) versus polar angle (horizontal axis), from three radially radiating antennas spaced at 0.5 m and 2 m spacing, respectively, and three tangentially radiating antennas spaced at 0.5m and 3m spacing, respectively, are shown in Figs. 4A, B, C, D. It can be seen that there is a large ripple on the received signal. Taking the 0.5m radial radiating antennas as the worst case the outage and coverage plots for a cell are shown in Figs. 5A and B, respectively. In the outage plot, a white space indicates coverage. In the coverage plot a white space indicates no coverage. It can be seen that the coverage plot shows the expected clover leaf pattern with ripples. The present inventors have found that the ripple effect is reduced drastically in practice by shadowing effects. Figs. 6A and 6B show the effect of log normal shadowing effects. The coverage plot shows a marked improvement. The shadowing strongly blurs the ripple effect. However, in the outage plot it is still possible to discern certain clusterings of outages relating to the ripples.

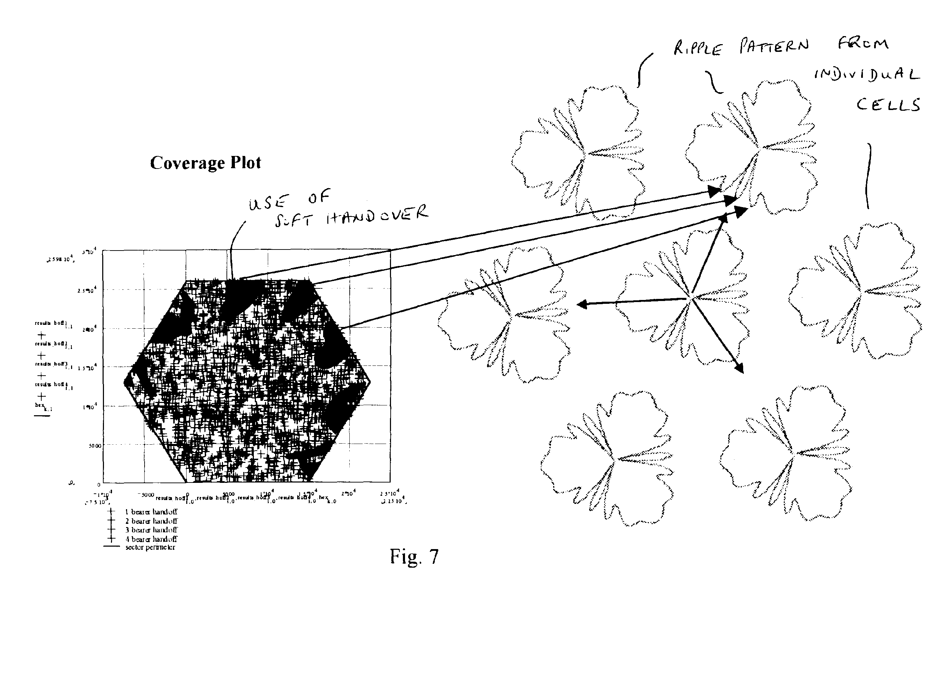

Preferably, the cellular mobile communications system supports soft handover between cells (inter-cell soft handover). Soft handover is described in US 5,625,876. In soft handover, the mobile terminal 50 continuously monitors the signal strength of pilot signals from neighboring transmitters and reports the results at regular intervals. When the network receives this report, the network controller may decide to place the mobile terminal in soft handover . In this case the network instructs one or more additional base station transceivers to communicate with the mobile terminal. For example, transmitted signals from two adjacent cells (or two adjacent sectors of one cell) may be transmitted to and combined in a mobile terminal 50 (downlink). To do this the network instructs two base stations in different cells (sectors) to transmit the same user message to a mobile terminal 50. The selection of which additional base station would be best to include in the soft handover may be assisted by the reports sent by the mobile terminal 50 about pilot signal strengths from neighboring base stations. Optionally, during soft handover, the network may also decide to demodulate the same message from the one mobile terminal at two or more receiving cell sites (uplink) and then to combine these at a suitable location in the network 1. The main effect of soft handover is to provide a form of spatial diversity on the downlink and there is a corresponding increase in signal quality as received at the mobile terminal 50. Usually, more than two cell sites can be in soft handover at one time with a single mobile terminal 50, the number being determined by the number of fingers on the Rake receiver of the mobile terminal 50. The use of soft handover is particularly advantageous in embodiments of the present invention as the signal power to each antenna 12-14 is reduced in accordance with the number of sectors at the cell site. Hence, the power from each antenna 12-14 is reduced by a factor of N where N is the number of sectors. This reduction in strength plus the interference between signals from the antennas 12-14 of the sectors would normally be expected to result in poor radio coverage of a cell. However, it has been determined that firstly shadowing effects reduce the interference from the antennas and that secondly soft handover can compensate for any remaining poor coverage. Fig. 7 shows the coverage plot of Fig. 6B with parts of the coverage plot where soft handover is used displayed (dark areas) with a link to the relevant part of the clover leaf beam pattern with ripples in the beam pattern in adjacent cells. It can be seen that the soft handover eliminates to a large extent any remaining difficulties with the coverage. It has been determined that coverage in cell sites in accordance with the above embodiment is of the same order (about 80% or more) as would be obtained with ideal omni operation (purpose built single omni antenna). This result is surprising.

As an addition or as an alternative to the use of inter-cell soft handover to reduce the ripple effect, other embodiments of the present invention may make use of transmit spatial diversity and/or phase differences between the signals transmitted from antennas 12-14. With transmit spatial diversity, each sector may have one or more additional transmitting antennas 12-2, 13-2, 14-2 which may be used to transmit the same signals as from the main antennas 12-1, 13-1, 14-1 except for the fact that these signals will be coded as a diversity transmission. Phase differences may be introduced into the signals supplied to the main antennas in a random manner e.g. differing cable lengths between splitter 20 and each antenna 12-14 in the various sectors of a cell site. The effect of these phase changes is to change the position of the ripples in the beam pattern.

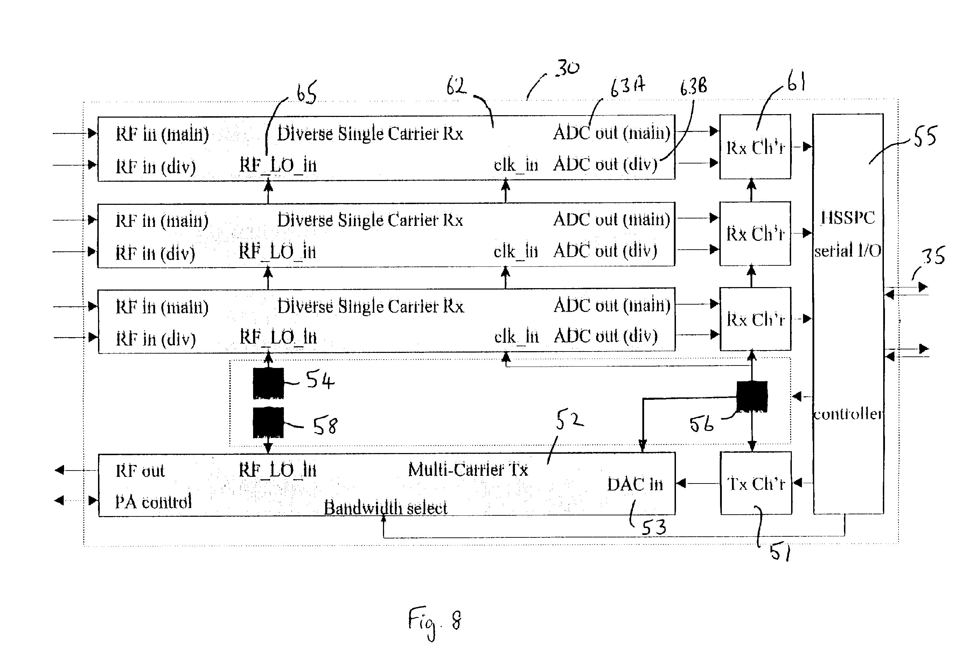

A transceiver unit 30 in accordance with an embodiment of the present invention is shown schematically in Fig. 8. It comprises an interface 55 for transmitting to, and for receiving from the serial connection 35 digital bit streams. The transceiver unit 30 also includes one or more transmitter units 52 coupled to the interface 55 via digital filter/pulse shaper 51 which is clocked by a clock signal provided by a clock signal circuit 56. In accordance with one embodiment of the present invention, one transmitter unit 52 may be provided for each carrier frequency with which the transceiver unit 30 may be used either initially or later. The transmitter unit 52 has a single bit stream input and includes a digital to analog converter 53 for converting the digital bit stream received from the core switch 42 via serial bus 35 into intermediate frequency (IF) analog signals. The D/A converter is clocked by a signal from clock circuit 56. These analog IF signals are upconverted to the carrier radio frequency in transmitter unit 52 using a radio frequency local oscillator 58 which may be common to all transmitter units in the transceiver unit 30 or may be an individual oscillator 58, one oscillator 58 being provided for each transmitter unit 52.

Alternatively, and more preferred, the transmitter unit 52 may be a multi-carrier transmitter unit. A multicarrier transmitter unit differs from a single carrier transmitter unit in that a part of the upconverting to analogue RF frequencies is carried out with the digital signals. Each digital signal relating to one carrier received from the core switch 42 is multiplied by the output of a numerically controlled oscillator in a modulator to provide a frequency offset relevant to the final carrier frequency. The digital signals are then added together and converted to analogue and upconverted with a single frequency. The offset from the upconverting frequency determines the carrier frequency.

Transceiver unit 30 also has one or more receiver units 62 coupled to the interface 55 by a digital filter/pulse shaper 61. Each receiver unit 62 has at least one input RF input from one of the antennas 12-14. Where two antennas are used per sector (one for spatial diversity) each receiver unit 62 has two RF inputs - the main and diversity input. The received analog RF signal or signals are downconverted to an IF analog signal or signals using the local oscillator 54 (each receiver unit may have n individual local oscillator 54). Each IF signal is then fed to an analog to digital converter 63A, 63B respectively which is clocked by the clock signal from the clock circuit 56. The digital bit stream is filtered/pulsed shaped in the digital filter 61 before being passed to the interface 55.

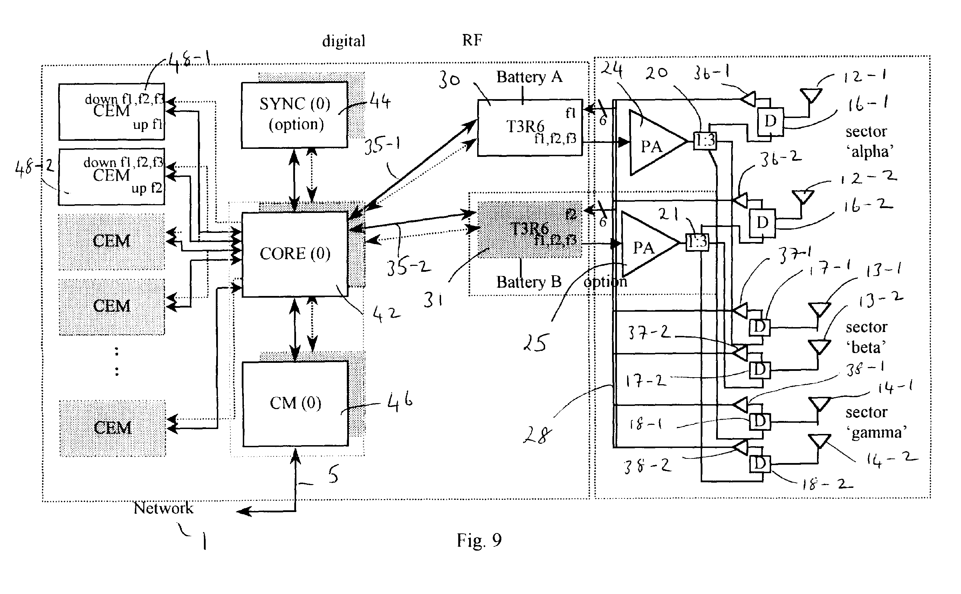

The BTS 10 described above may be gracefully upgraded to meet an increased need for capacity with the minimum of disturbance to installed hardware. Fig. 9 shows one of a series of possible first upgrades of the BTS of Fig. 2, for example for two carriers with transmit diversity which is a further embodiment of the present invention. Reference numbers in Fig. 9 which are the same as in Fig. 2 refer to the same components. As there are two carriers (two different frequency bands f1 and f2), two processing units 48-1, 48-2 are provided, unit 48-1 being provided for the carrier with the frequency band f1_{T} on transmit and f1_{R} on receive, whereas unit 48-1 is provided for the carrier with the frequency band f2_{T} on transmit and f2_{R} on receive. Two transceiver units 30, 31 are provided, one for receiving the carrier frequency f1_{R} and a second one for the carrier frequency f2_{R}.

Each transceiver unit, 30, 31 is connected to the core switch 42 by a serial bus, 35-1, 35-2 respectively. Each transceiver unit 30, 31 upconverts analog IF signals to the relevant carrier frequency f1_{T} or f2_{T} using the combined output of two single carrier transmitter units 52 or a single multicarrier transmitter unit and the result is supplied to power amplifier 24. The output from amplifier 24 is transmitted to main antennas 12-1, 13-1, 14-1 via power splitter 20.

The second transceiver unit 31 also upconverts to both carrier frequencies f1_{T} or f2_{T} and the outputs of the relevant transmitter units 52 of second transceiver unit 31 are fed to a second power amplifier 25. To distinguish the signals transmitted via power amplifier 25 from those from power amplifier 24, the signals from the power amplifier 25 are coded with an indicator that they are for diversity transmission. The coded amplified RF output is then transmitted to the diversity antennas 12-2, 13-2, 14-2 via a power splitter 21.

An alternative embodiment of the base station 10 which is a modification of the base station 10 of Fig. 9 provides a base station 10 with two-sector transmit and sectored receive. In this embodiment the output of the transceiver unit 30 is transmitted to a subset of the antennas. For example if there are four antennas 12-1, 12-2; 13-1, 13-2, arranged as two 180° sectors, the output of power amplifier 24 is sent to antenna 12-1 and the output of power amplifier 25 is sent to antenna 13-1. Antennas 12-1 and 12-2 provide diversity receive for the first sector and, antennas 13-1 and 13-2 for the second sector. No power splitters are required. The received signals may be processed in accordance with standard sectored receive operation as described above (MASHO). Typically, the two signals from the two antennas in each sector are downconverted and signal processed before being combined in a selective combiner or in a maximal ratio or equal gain combiner. Standard mobile assisted softer handover may be performed between the two sectors.

A modification of this embodiment provides two sectors, one of 120° and one of 240°. In this case the output from power amplifier 24 is sent to antenna 12-1 servicing a first sector, whereas the output of power amplifier 25 is sent to antennas 13-1 and 14-1 via a splitter 21 transmitting to two sectors of 120° in partial omni-transmit mode, while receiving from antennas 13-1, 13-2, 14-1 and 14-2 using maximal ratio combining or another combining technique to achieve pseudo-sectored receive.

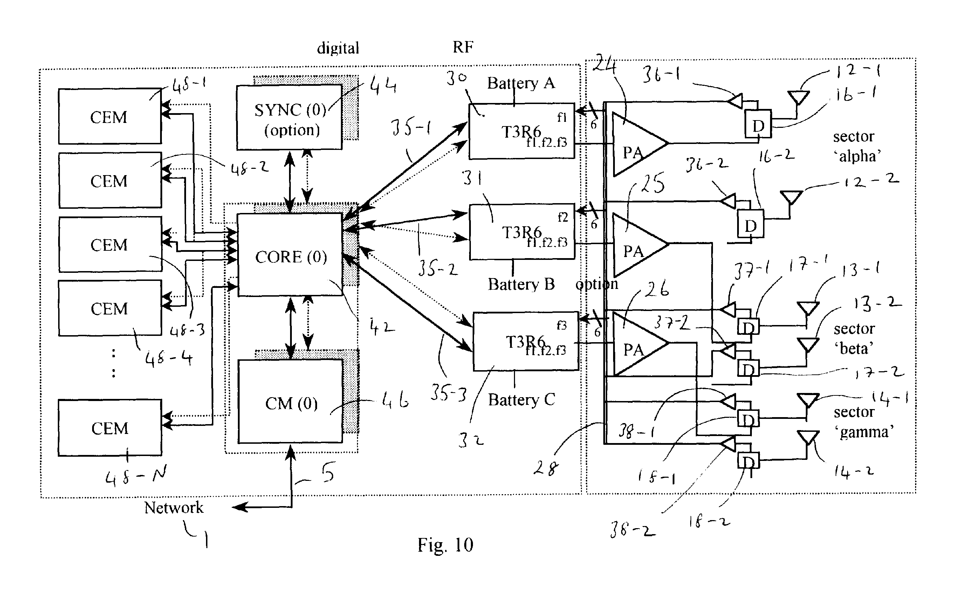

A base station 10 in accordance with a further embodiment of the present invention is shown in Fig. 10 which is a graceful upgrade from the base stations 10 described with reference to Figs. 8 and 9. This base station 10 is configured for multi-carrier use with no transmit diversity. Reference numbers which are the same in Figs. 8-10 refer to the same components. In this embodiment three transceiver units 30, 31, 32 are provided, one for each received carrier frequency f1_{R}, f2_{R} and f3_{R}. The receive operation is as for a standard sectored cell site with mobile assisted handover between sectors. All three transmit carrier frequencies bands f1_{T}, f2_{T} and f3_{T} may be transmitted from any one of the transceiver units 30-32 to one antenna, 12-1, 13-1, 14-1 in each sector. A plurality of processing units 48-1 to 48-n are provided as required. The skilled person will realize that with this upgrade a base station 10 has reached sectored transmit-sectored receive operation.

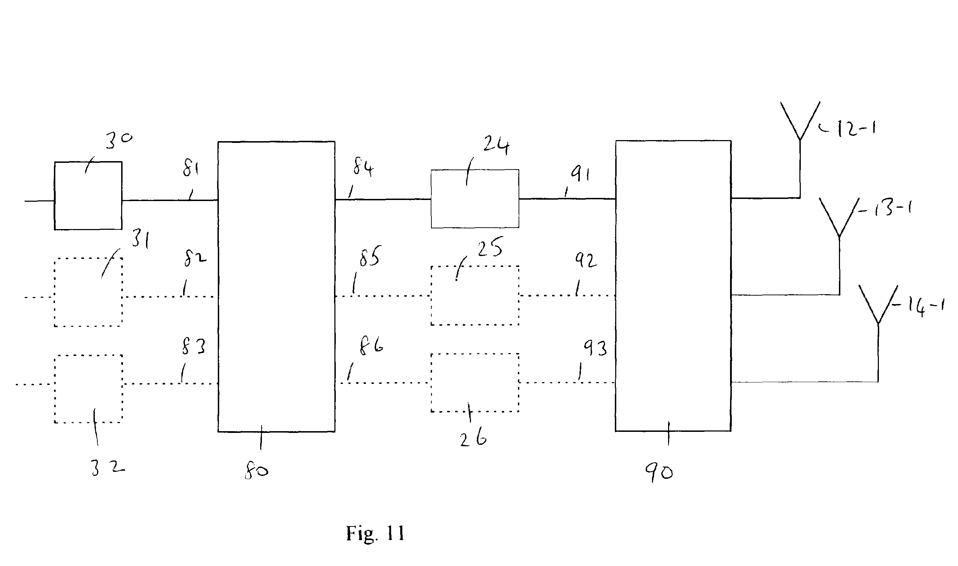

A further embodiment of the present invention will be described with reference to Fig. 11. One or more transceiver units 30-32 are connected to an inverse NxN Butler matrix 80 where N is the number of sectors (a 3x3 Butler matrix is shown). Butler matrices are well known to a skilled person and are described for instance in the book "Antennas and Radiowave Propagation", by R. E. Collin, MacGraw Hill, 185 and in "Digital, Matrix and Intermediate Frequency scanning", by L. J. Butler, Microwave Scanning Arrays, ed. J. C. Hansen, Academic Press, New York, 1966, Chapter 3. In the initial configuration a single connection is made from one transceiver unit to one input 81 of the inverse Butler matrix 80. One or more outputs 84-86 of the inverse Butler matrix 80 is (are) applied to one or more power amplifiers 24-26. Each output of a power amplifier 24-26 is applied to a respective input 91-93 of an NxN Butler matrix 90. The outputs 94-96 of the Butler matrix 90 are connected to the sector antennas 12-1.....14-1. In the initial configuration, a single amplifier 24 is used. The unused outputs 85, 86 of the inverse Butler matrix 80 and the unused inputs 92, 93 of the Butler matrix 90 are terminated in a suitable way. The signals on input 81 of the inverse Butler matrix 80 are split between the three outputs 84-86. One of these outputs (84) is provided to the power amplifier 24 where it is amplified. The amplified output from the amplifier 24 is supplied to one input 91 of the Butler matrix 90. The Butler matrix 90 splits the input power between the three outputs 94-95 and supplies these to the antennas 12-1... 14-1. The Butler matrix 90 therefore operates like the splitter 20 of Fig. 2.

The system of Fig. 11 can be upgraded to three amplifiers 24-26. In this case the three signals for the three sectors are supplied by three transceiver units 30-32 individually to the inputs 81-83 of inverse Butler matrix 80. The outputs 84-86 of the inverse Butler matrix 80 are individually supplied to the amplifiers 24-26. Each output 84-86 is a combination of the signals on inputs 81-83. The outputs 84-86 from the inverse Butler matrix 80 are then individually amplified and individually supplied to the inputs 91-93 of the Butler matrix 90. The outputs 94-96 are the amplified versions of the signals on the inputs 81-82 of the inverse Butler matrix 80, the signals on each output 94-96 are those destined for one sector. The use of an inverse and a normal Butler matrix 80, 90 allows a graceful upgrade without replacement of equipment whereas, for example, with reference to Figs. 2 and 10, the upgrade to the system of Fig. 10 requires removal of the splitters 20.

If two amplifiers 24, 25 are used between the inverse Butler matrix 80 and the Butler matrix 90 and only two inputs 81 and 82 are provided with signals, the outputs on antennas 12-1...14-1 include a mixture of the amplified version of the signals on inputs 81 and 82 as well as some cross-talk. This cross-talk is not sufficient to prevent operation of this embodiment of the present invention.

Instead of using two amplifiers in this way, the embodiment described above as an alternative to the embodiment of Fig. 9 may be used as an intermediate position in the growth plan. In this alternative embodiment, base station 10 provides two-sector transmit and sectored receive. However, this involves more equipment changes.

In the above embodiment the inverse Butler matrix 80 is described as being located after the transceiver units 3-32, however the present invention is not limited thereto. The inverse Butler matrix may be implemented in the digital signal portion (e.g. between items 55 and 61 in Fig. 8) of the transceiver units 31-32. In this case it is a digital inverse Butler matrix whereas the Butler matrix 90 is analog. The inverse Butler matrix is then provide with bit streams from the core switch 42. The outputs of the inverse Butler matrix are then provided to one or more of the transceiver units 30-32, depending on how many of the transceiver units 30-32 are being used. Each relevant output is provided to an input of the Butler matrix 90. Other details of the implementations remain the same as described above.

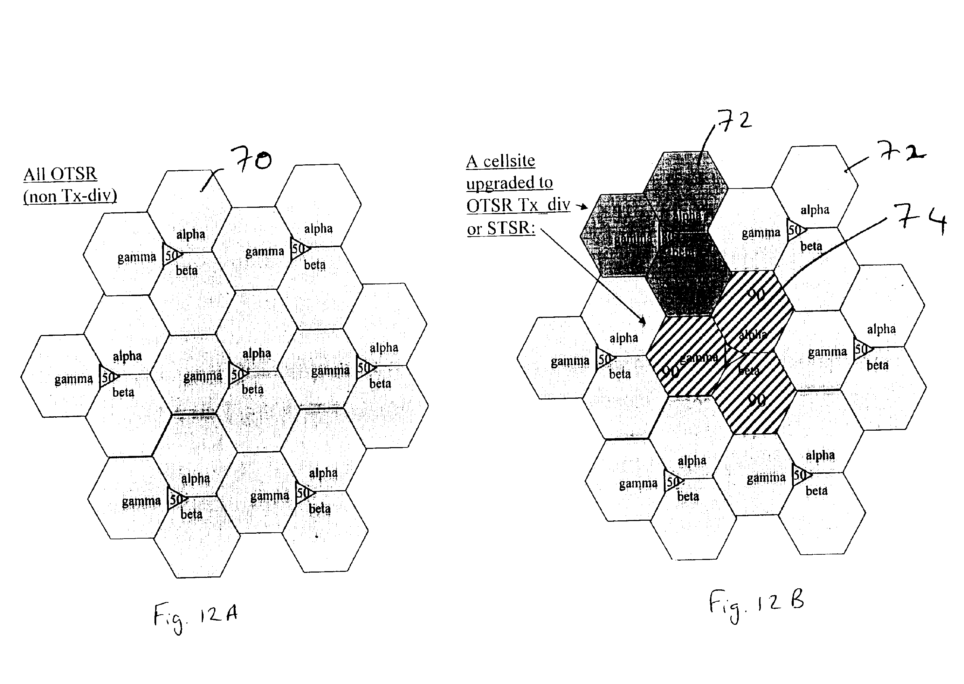

Figs. 12A and B demonstrate a growth plan in accordance with an embodiment of the present invention. Fig. 12 shows the initial configuration with all cells 70 provided with pseudo-omni transmit, sectored receive base station 10 in accordance with Fig. 2. As capacity problems are met in certain cells 70, the relevant highly loaded cells 72 may be upgraded by making the changes to the original base stations 10 to provide pseudo-omni transmit with diversity base stations in accordance with Fig. 9 or over-loaded cells 74 may be upgraded by making the changes to base stations 10 according to Figs. 2 or 9 to form sector transmit-sector receive base stations in accordance with Fig. 10. The changes necessary are relatively minor as they involve addition of power amplifiers, transceiver units and processing units but do not require major changes in the site hardware, e.g. all antennas remain the same.

## Claims

1. A base transceiver station for a cellular radio frequency wireless telecommunications system, the base station transceiver being for radio communication with a mobile terminal over an air interface, comprising:
at least a first and a second antenna device, the first and second antenna devices being adapted for providing radio coverage over a first and a second sector of a cell, respectively, the first and second sectors being substantially independent geographical areas and the combined geographical area of the sectors covering an angle of substantially 360° in the azimuth plane of the first and second antenna devices;
a transmitter unit comprising a first power amplifier, the transmitter unit transmitting substantially the same signal to the first and second antenna devices to provide omnitransmission to the cell;
a first receiver unit for receiving signals from the first and second antenna devices and for independently amplifying the received signals; and
a combiner for selectively combining signals from the first receiver unit on a mobile terminal-by-mobile terminal basis.

2. The base station according to claim 1, wherein the combiner is adapted for preferentially giving a higher weighting to the received signals from the first or second antenna devices which have a higher signal quality.

3. The base station according to claim 2, wherein the combiner is a maximum ratio combiner.

4. The base station according to any previous claim, wherein the transmitter unit comprises a second power amplifier and the base station comprises third and fourth antennas for transmitting to and receiving from the first and second sectors, respectively, the second power amplifier transmitting to the third and fourth antennas substantially the same signals to provide diversity transmission.

5. The base station according to claim 4, further comprising a second receiver unit for receiving signals from the third and fourth antenna devices and for independently amplifying the received signals.

6. The base station according to any previous claim, further comprising a splitter for splitting the signal from the transmitter unit among the first and second antenna devices.

7. The base station according to claim 6, wherein the splitter is a Butler matrix.

8. The base station according to claim 7, wherein an input to the transmitter unit is provided by an inverse Butler matrix.

9. A cellular radio frequency wireless telecommunications system comprising:
at least one cell with a base station transceiver for radio communication with mobile terminals over an air interface, the base station comprising:
at least a first and a second antenna device, the first and second antenna devices being adapted for providing radio coverage over a first and a second sector, respectively, the first and second sectors being substantially independent geographical areas and the combined geographical area of the sectors covering an angle of substantially 360° in the azimuth plane of the first and second antenna devices;
a transmitter unit comprising a first power amplifier and for transmitting substantially the same signal to the first and second antenna devices;
a first receiver unit for receiving signals from the first and second antenna devices and for independently amplifying the received signals; and
a combiner for selectively combining signals from the first receiver unit on a mobile terminal-by-mobile terminal basis.

10. The system according to claim 9, wherein the combiner is adapted for preferentially giving a higher weighting to the received signals from the first or second antenna devices which have a higher signal quality.

11. The system according to claim 10, wherein the combiner is a maximum ratio combiner.

12. The system according to any of the claims 9 to 11, wherein the transmitter unit comprises a second power amplifier and the base station transceiver comprises third and fourth antennas for transmitting to and receiving from the first and second sectors, respectively, the second power amplifier transmitting to the third and fourth antennas substantially the same signals to provide diversity transmission.

13. The system according to claim 12, further comprising a second receiver unit for receiving signals from the third and fourth antenna devices and for independently amplifying the received signals.

14. The system to any of the claims 9 to 13, further comprising a splitter for power splitting the signals from the transmitter unit among the first and second antenna devices.

15. The system according to claim 14, wherein the splitter is a Butler matrix.

16. The system according to claim 15, wherein an input to the transmitter unit is provided by an inverse Butler matrix.

17. The system according to any of the claims 9 to 16, wherein the system supports soft handover.

18. A method of operating a cellular radio frequency wireless telecommunications system comprising at least one cell with a base station transceiver for radio communication with mobile terminals over an air interface; the method comprising the steps of:
providing radio coverage over a first and a second sector of the cell, the first and second sectors being substantially independent geographical areas and the combined geographical area of the sectors covering an angle of substantially 360°;
amplifying a radio frequency signal with a power amplifier;
transmitting substantially the same amplified signal to the first and second sectors; receiving signals from the first and second sectors and for independently amplifying the received signals; and
selectively combining signals from the receiver unit on a mobile terminal-by-mobile terminal basis.
